# EUROPÄISCHE PATENTANMELDUNG

(11) **EP 1 376 456 A1**
(43) Veröffentlichungstag der Anmeldung: **02.01.2004**
(21) Anmeldenummer: 03013955.4
(22) Anmeldetag: 20.06.2003
(51) Int. Cl.: G06K 17/00

(54) **Vorrichtung zum Auffinden von Objekten**

(30) Priorität: 20.06.2002 DE 10227581
(71) Anmelder: ESG Elektroniksystem-und Logistik-Gesellschaft mit beschränkter Haftung, D-81675 München (DE)
(72) Erfinder: Herzog, Markus, Dr., 85570 Ottenhofen (DE)
(74) Vertreter: Herzog, Markus, Dipl.-Phys. Dr.

(57) **Zusammenfassung**

Die Erfindung betrifft eine Vorrichtung (10) zum Auffinden eines vorbestimmten Objekts (12) an einem einer Mehrzahl von Orten (14, 16).Jedem Objekt (12) ist ein Objekt-Transponder (22) zugeordnet, der das Objekt (12) identifizierende Daten (Objektdaten) beinhaltet. Jedem Ort (14, 16) ist ein Orts-Transponder (24) zugeordnet, der den jeweiligen Ort (14, 16) identifizierende Daten (Ortsdaten) beinhaltet. Ferner ist eine mobile Abfrageeinheit (20) vorgesehen mit wenigstens einem Interrogator (28), um von den Transpondern (22, 24) die Objektdaten bzw. die Ortsdaten abzufragen. Schließlich umfasst die Abfrageeinheit (20) einen Ortsdatenspeicher (32), in dem dann, wenn die abgefragten Daten Ortsdaten sind, diese Ortsdaten ablegt werden, und einen Datensatzspeicher (36), in welchem dann, wenn die abgefragten Daten Objektdaten sind, ein Datensatz ablegt wird, welcher zumindest die Objektdaten und die in dem Ortsdatenspeicher abgelegten Ortsdaten umfasst.

## Beschreibung

Die Erfindung betrifft eine Vorrichtung zum Auffinden eines vorbestimmten Objekts an einem einer Mehrzahl von Orten.

Obgleich die Erfindung im Folgenden am Beispiel eines Bürobetriebs, beispielsweise einer Kanzlei, beschrieben werden wird, sei bereits an dieser Stelle darauf hingewiesen, dass sie mit Vorteil ebenso auch auf anderen Anwendungsgebieten eingesetzt werden kann, beispielsweise bei der sogenannten "chaotischen" Lagerhaltung. Im Anwendungsfall "Kanzlei" können die Objekte Akten, den Akten zugeordnete Aservate oder dergleichen Gegenstände sein, während die Orte einzelne Räume der Kanzlei, einzelnen Arbeitsplätzen zugeordnete Bereiche, Teilbereiche eines Aktenlagers oder dergleichen Orte sein können. Im Anwendungsfall "Lagerhaltung" hingegen können die Objekte die gelagerten Gegenstände bzw. Waren sein, während die Orte einzelne Teilbereiche des Lagers sein können, beispielsweise Fächer von Lagerregalen.

Zur Erleichterung des Auffindens von Akten in einem Bürobetrieb ist aus dem Stand der Technik ein System bekannt, bei welchem jede Akte mit einem Objekt-Transponder versehen wird, wobei die von diesen Objekt-Transpondern bereitgestellten Objektdaten die jeweils zugehörige Akte eindeutig identifizieren. Darüber hinaus ist jedem Ort des Bürobetriebs, beispielsweise jedem Raum des Bürogebäudes, ein Interrogator zugeordnet, der dann, wenn eine Akte in seine Abfragereichweite kommt, von deren Transponder die Objektdaten abfragt. Nach erfolgter Abfrage übermittelt der Interrogator über eine festverdrahtete Verbindung oder eine Funkstrecke an eine Zentraleinheit einen Datensatz, der seine eigene Identität, also die Ortsdaten, sowie die Objektdaten der Akte umfasst.

Sind die Interrogatoren in der Nähe der Türen der Büroräume installiert, so wird die Anwesenheit der Akten in einem bestimmten Raum automatisch an die Zentraleinheit gemeldet, wenn die Akte in diesen Raum gebracht wird. Zwar wird auch dann, wenn die Akte zu einem späteren Zeitpunkt von einem Büroboten oder dergleichen wieder aus dem betrachteten Raum herausgetragen wird, ein die Anwesenheit dieser Akte in dem Raum meldender Datensatz an die Zentraleinheit übertragen. Jedoch kann davon ausgegangen werden, dass die Akte im Zuge des Botengangs alsbald in einen anderen Raum des Bürobetriebs gebracht wird, so dass der dortige Interrogator die Zentraleinheit wieder auf den aktuellen Stand bringt. Somit enthält die Zentraleinheit lediglich kurzzeitig nicht die korrekten Informationen über den Aufenthaltsort der Akte. Somit kann das bekannte System bei entsprechend dichter Bestückung des Bürobetriebs mit fest installierten Interrogatoren eine im Wesentlichen lückenlose Überwachung der Bewegung der Akten gewährleisten. D.h. die Zentraleinheit kann praktisch zu jedem Zeitpunkt darüber Auskunft geben, an welchem Ort sich eine bestimmte Akte befindet.

Nicht zuletzt aufgrund der großen Anzahl fest installierter Interrogatoren ist das bekannte System kostenintensiv in Anschaffung und Wartung, wobei der Einsatz festverdrahteter Datenverbindungen zwischen den Interrogatoren und der Zentraleinheit eine weitere Steigerung der Kostenintensität zur Folge hat. Der Einsatz einer Funkverbindung zwischen den Interrogatoren und der Zentraleinheit stößt hingegen aufgrund des damit verbundenen "Elektrosmogs" beim Büropersonal nicht immer auf die erforderliche Akzeptanz, wenn nicht gar auf vollständige Ablehnung.

Demgegenüber ist es Aufgabe der Erfindung, eine einfach aufgebautere und kostengünstigere Vorrichtung zum Auffinden von Objekten bereitzustellen.

Diese Aufgabe wird erfindungsgemäß gelöst durch eine Vorrichtung zum Auffinden eines vorbestimmten Objekts an einem einer Mehrzahl von Orten, umfassend:
- wenigstens einen dem Objekt zugeordneten Objekt-Transponder, der das Objekt identifizierende Daten (Objektdaten) beinhaltet,
- eine Mehrzahl von Orts-Transpondern, wobei jedem der Mehrzahl von Orten wenigstens ein Orts-Transponder zugeordnet ist, der den jeweiligen Ort identifizierende Daten (Ortsdaten) beinhaltet,
- eine mobile Abfragevorrichtung mit wenigstens einem Interrogator, um von den Transpondern die Objektdaten bzw. die Ortsdaten abzufragen,
- einen Ortsdatenspeicher, in welchem dann, wenn die abgefragten Daten Ortsdaten sind, diese Ortsdaten ablegt werden, und
- einen Datensatzspeicher, in welchem dann, wenn die abgefragten Daten Objektdaten sind, ein Datensatz ablegt wird, welcher zumindest die Objektdaten und die in dem Ortsdatenspeicher abgelegten Ortsdaten umfasst.

Die Erfindung basiert auf der Erkenntnis, dass die meisten Aktenbewegungen in Kanzleien durch Büroboten vorgenommen werden. Stattet man nun einen Büroboten mit der mobilen Abfragevorrichtung aus, so kann er immer dann, wenn er eine oder mehrere Akten in einen Büroraum bringt, zunächst die Ortsdaten des diesem Büroraum zugeordneten Orts-Transponders abfragen und anschließend die Objektdaten der den Akten zugeordneten Objekt-Transpondern abfragen. Bei der letztgenannten Abfrage werden dann in den Datensatzspeicher zu den den Akten zugehörigen Objektdaten auch die gerade eingelesenen Ortsdaten des Büroraums abgelegt, in welchen der Bürobote diese Akten gerade gebracht hat. Dies stellt eine Grundaktualisierung des Inhalts des Datensatzspeichers sicher. Insbesondere wird zu jeder Akte deren Bewegung durch die Räume der Kanzlei nachgezeichnet.

Nun kann es immer wieder vorkommen, dass Akten nicht von den Büroboten von einem Büroraum zum nächsten gebracht werden. Beispielsweise kann eine Sekretärin eine Akte persönlich in eine der Fachabteilungen der Kanzlei bringen. Aber auch diese, den Wert der Grundaktualisierung in Frage stellende Aktenbewegung kann mit Hilfe der erfindungsgemäßen Vorrichtung aufgefangen werden: Und zwar kann ein Bürobote, der gerade Akten in einen bestimmten Büroraum gebracht hat, die Objektdaten nicht nur dieser Akten abfragen, sondern sämtlicher sich in diesem Büroraum befindender Akten. Durch diese Ergänzungsaktualisierung können somit auch die Datensätze solcher Akten wieder auf den richtigen Stand gebracht werden, die nicht von einem Büroboten in diesen Büroraum gebracht worden sind.

Eine weitere Ergänzungsaktualisierung der in einem bestimmten Büroraum befindlichen Akten kann durch den Büroboten beispielsweise dann durchgeführt werden, wenn er aus einem bestimmten Büroraum eine Akte abholt, um sie zu einem Sachbearbeiter oder zurück in die Aktenablage zu bringen.

Schließlich ist es auch noch möglich, dass der Bürobote speziell zum Zweck der Ergänzungsaktualisierung sämtliche Büroräume der Kanzlei nacheinander abgeht.

Auf die vorstehend beschriebene Weise spiegelt der Inhalt des Datensatzspeichers den aktuellen Aufenthaltsort jeder Akte mit einem Fehler von allenfalls einigen wenigen Stunden wieder. Dieser geringe zeitliche Fehler ist bei der Suche nach einer bestimmten Akte aber leicht zu verschmerzen:

Der Bürobote befragt zunächst den Datensatzspeicher, in welchem Büroraum sich die gesuchte Akte befinden müsste. Findet der Bürobote die Akte in dem angegebenen Büroraum nicht, beispielsweise weil sie von einer Sekretärin in einen anderen Büroraum gebracht worden ist, so wird sich diese Sekretärin auf Grund des engen zeitlichen Zusammenhangs sicher daran erinnern, wohin sie die gesuchte Akte gebracht hat. Mit dieser Information wird es für den Bürobote ein leichtes sein, die Akte schnell aufzufinden. Sollte die Akte tatsächlich einmal, beispielsweise auf Grund ungewöhnlich schneller Aktenbewegungen, nicht auffindbar sein, so wird sie bei der nächsten routinemäßigen Ergänzungsaktualisierung ohne Weiteres lokalisiert werden können.

Festzuhalten ist, dass die routinemäßigen Ergänzungsaktualisierungen für die Büroboten keinen zusätzlichen Arbeitsaufwand darstellen, da die für diesen zusätzlichen Kanzleidurchgang erforderliche Zeit erheblich kürzer ist als die zur Aktensuche üblicherweise aufzuwendende Zeit. Zudem kann dieser zusätzliche Kanzleidurchgang bei jedem beliebigen Zeitpunkt durchgeführt werden, d.h. die Büroboten können hierzu "ruhigere" Bürozeiten nutzen.

In Weiterbildung der Erfindung wird vorgeschlagen, dass die mobile Abfrageeinheit ferner mit einer Zentraleinheit verbindbar ist, welche einen zentralen Datensatzspeicher umfasst sowie eine Eingabevorrichtung zum Auswählen eines gewünschten Objekts und eine Anzeigevorrichtung zum Anzeigen der zu dem gewünschten Objekt in dem Datensatzspeicher gespeicherten Ortsdaten. Die mobile Abrageeinheit kann mit der Zentraleinheit zum Datenaustausch entweder hardwaremäßig, d.h. über ein Verbindungskabel, oder über eine Funkstrecke verbindbar sein. Die Verbindung kann sowohl zum Auslesen der in der mobilen Einheit gespeicherten Daten zum Zwecke der Aktualisierung des zentralen Datensatzspeichers als auch zum Einlesen der Daten des zentralen Datensatzspeichers zum Zwecke der Aktualisierung des Datensatzspeichers der mobilen Einheit dienen. Der Einsatz einer solchen Zentraleinheit ist insbesondere dann sinnvoll, wenn eine Mehrzahl von Büroboten mit einer entsprechenden Mehrzahl mobiler Abfrageeinheiten ausgestattet ist.

Im Falle des Einsatzes einer Mehrzahl von mobilen Abfrageeinheiten, aber nicht nur in diesem Falle, ist es ferner von Vorteil, wenn die Vorrichtung ein Zeitglied umfasst, das den Zeitpunkt der Abfrage definierende Daten (Zeitdaten) bereitstellt, und dass der Datensatz ferner die Zeitdaten umfasst. Auf Grundlage dieser Zeitdaten kann insbesondere beim Datenaustausch zwischen dem zentralen Datensatzspeicher und dem Datensatzspeicher der mobilen Abfrageeinheit sichergestellt werden, dass immer die aktuellsten Daten in den Datensatzspeichern enthalten sind.

Um die Anschaffungskosten für die Transponder niedrig halten zu können, wird vorgeschlagen, dass die von den Transpondern bereitgestellten Daten maschinen-definierte Daten sind. Diese maschinen-definierten Daten können beispielsweise eine fortlaufende Nummer beinhalten. Zur Erhöhung der Benutzerfreundlichkeit der erfindungsgemäßen Vorrichtung kann aber vorgesehen sein, dass der Datensatz neben den maschinen-definierten Objektdaten ferner benutzer-definierte Objektdaten umfasst. Als benutzer-definierte Objektdaten können beispielsweise die von der Kanzlei den einzelnen Akten zugewiesenen Aktenzeichen verwendet werden. Die Zuordnung der maschinen-definierten Objektdaten zu den benutzer-definierten Objektdaten kann in einem Konkordanzverzeichnis, beispielsweise einem Konkordanzdatenspeicher, abgelegt sein.

Zur Bereitstellung eines Energiesparmodus für die üblicherweise batteriebetriebenen mobilen Abfrageeinheiten wird in Weiterbildung der Erfindung vorgeschlagen, dass die mobile Abfrageeinheit einen, vorzugsweise von Hand betätigbaren, Schalter zur Aktivierung des wenigstens einen Interrogators umfasst.

Um gezielt die Objektdaten bestimmter Akten abfragen zu können, wird vorgeschlagen, dass der wenigstens eine Interrogator die Objektdaten bzw. die Ortsdaten von den Transpondern nur dann abfragt, wenn die Distanz zwischen Interrogator und Transponder einen vorbestimmten Abstand unterschreitet. Gleichwohl sollte dieser vorbestimmte Mindestabstand nicht zu gering sein, damit auch bei relativ ungeordnet gestapelten Akten eine zuverlässige Abfrage der Objektdaten sichergestellt ist. Zur Erfassung nicht präzise gestapelter Akten genügt beispielsweise ein Mindestabstand in der Größenordnung von 20 cm. Sollen jedoch auch verkehrt herum auf dem Stapel angeordnete Akten erfasst werden können, so sollte der Mindestabstand vorzugsweise in der Größenordnung von etwa 50 cm betragen. Da Akten, wie vorstehend angedeutet wurde, üblicherweise gestapelt werden, ist es ferner von Vorteil, wenn der wenigstens eine Interrogator zur gleichzeitigen Kommunikation mit einer Mehrzahl von Transpondern ausgebildet ist.

Aus Kostengründen wird in Weiterbildung der Erfindung vorgeschlagen, dass die Transponder passive Transponder sind. Derartige passive Transponder beziehen die Energie zum Antworten auf das Interrogationssignal aus der Sendeenergie dieses Signals. Aus Kostengründen ist es ferner vorzuziehen, dass die Objekt-Transponder und die Orts-Transponder baugleich sind.

Um den Büroboten das Auffinden bestimmter Akten erleichtern zu können, wird in Weiterbildung der Erfindung vorgeschlagen, dass die mobile Abfrageeinheit eine Eingabevorrichtung zum Auswählen eines gewünschten Objekts umfasst. Die Eingabevorrichtung kann dabei eine Tastatur zur Direkteingabe von das Objekt kennzeichnenden Angaben, beispielsweise der benutzer-definierten Daten, oder/und eine Vorrichtung zum Bewegen eines Zeigerpfeils auf einem Bildschirm und zum Auslösen einer auf dem Bildschirm angezeigten Aktion sein, beispielsweise ein Touchpad, ein Trackball oder eine andere computermouse-artige Vorrichtung.

Ferner kann die mobile Abfrageeinrichtung eine Anzeigevorrichtung zum Anzeigen der zu dem gewünschten Objekt in dem Datensatzspeicher gespeicherten Ortsdaten umfassen, wobei es zusätzlich denkbar ist, dass die Anzeigevorrichtung zu dem gewünschten Objekt ferner die in dem Datensatzspeicher gespeicherten Zeitdaten anzeigt.

Um den Inhalt des Datensatzspeichers, insbesondere des zentralen Datensatzspeichers, auf einem möglichst aktuellen Stand halten zu können, kann in Weiterbildung der Erfindung wenigstens eine ortsfeste Abfrageeinheit vorgesehen sein, welche wenigstens einen Interrogator aufweist, um von den Objekt-Transpondern die Objektdaten abzufragen. Diese ortsfeste Abfrageeinheit ist mit der Zentraleinheit vorzugsweise ständig in Datenaustauschverbindung und liefert an diese neben den Objektdaten und den eigenen Ortsdaten vorzugsweise auch Zeitdaten. Das Vorsehen derartiger ortsfester Abfrageeinheiten ist insbesondere in solchen Abteilungen sinnvoll, die im routinemäßigen Betrieb der Kanzlei häufig Anlaufstation von Akten sind. Es ist hier insbesondere an die Fristenüberwachungsabteilung sowie solche Abteilungen gedacht, die den formalen Schriftwechsel mit Behörden und Gerichten abwickeln.

Die Erfindung wird im Folgenden an einem Ausführungsbeispiel anhand der beigefügten Zeichnungen näher erläutert werden. Es stellt dar:
- Fig. 1: eine schematische Darstellung einer erfindungsgemäßen Vorrichtung zum Auffinden von Akten in einer Kanzlei; und

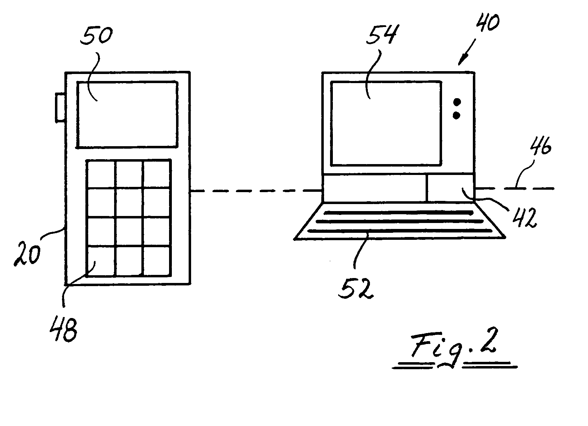

- Fig. 2: eine schematische Darstellung einer mit einer Zentraleinheit in Datenaustauschverbindung stehenden mobilen Abfrageeinheit.

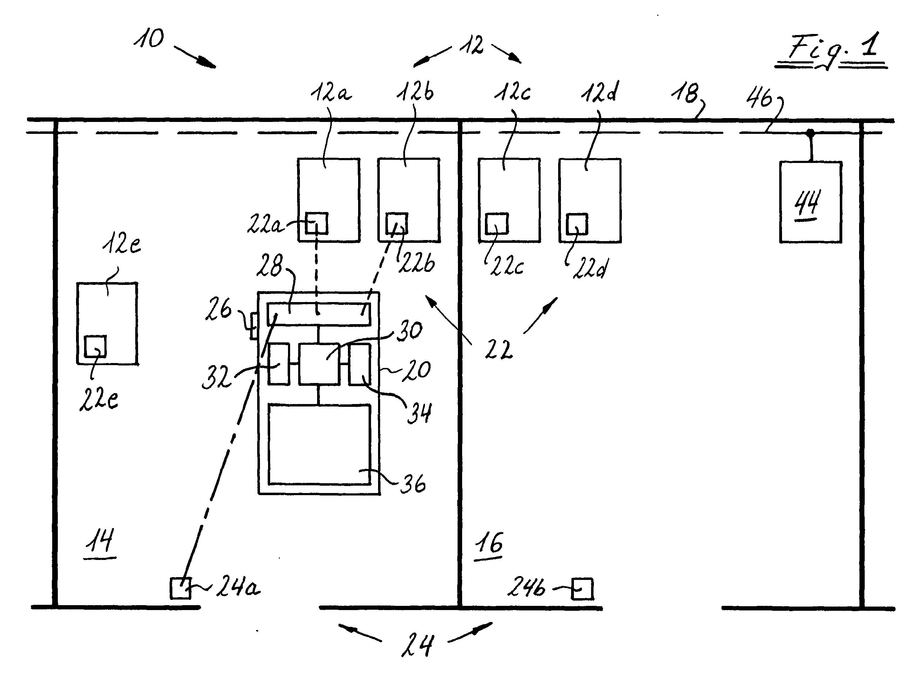

In Fig. 1 ist grob schematisch eine erfindungsgemäße Vorrichtung 10 zum Auffinden von Akten 12 in Büroräumen 14, 16 einer Kanzlei 18 dargestellt. Zentraler Teil der erfindungsgemäßen Vorrichtung 10 ist eine mobile Abfrageeinheit 20, die bei Unterschreiten eines vorbestimmten Mindestabstands mit passiven Transpondern 22a bis 22e sowie weiteren passiven Transpondern 24a und 24b in Abfrageverbindung treten kann. Wie in Fig. 1 dargestellt ist, ist jeder Akte 12a bis 12e einer der Transponder 22a bis 22e zugeordnet. Die Transponder 22a bis 22e werden daher im Folgenden zusammenfassend als Akten-Transponder 22 bezeichnet. In analoger Weise werden die den Büroräumen 14 und 16 zugeordneten Transponder 24a, 24b im Folgenden zusammenfassend als Büroraum-Transponder 24 bezeichnet.

Betritt ein (nicht dargestellter) Bürobote, der die Abfrageeinheit 20 bei sich trägt, den Büroraum 14, um dort die Akten 12a und 12b abzugeben, so aktiviert er zunächst die Abfrageeinheit 20 durch Betätigung des Schalters 26. Anschließend bringt er die Abfrageeinheit 20 in die Nähe des Büroraum-Transponders 24a, der beispielsweise im Bereich des Türrahmens angebracht sein kann. Unterschreitet der Abstand zwischen der Abfrageeinheit 20 und dem Transponder 24a einen vorbestimmten Mindestwert, beispielsweise einen halben Meter, so empfängt der Interrogator 28 der Abfrageeinheit 20 von dem Transponder 24a ein Signal, das beispielsweise die Zimmernummer des Büroraums 14 angibt oder dieser zuordenbar ist. Erkennt der Prozessor 30 der Abfrageeinheit 20, dass es sich bei dem empfangenen Signal um ein den Büroraum 14 identifizierendes, Ortsdaten enthaltendes Signal handelt, so legt er diese Ortsdaten in einem Ortsdatenspeicher 32 ab.

Anschließend bringt der Bürobote die Abfrageeinheit 20 in die Nähe der Akten 12a, 12b, bis der Interrogator 28 bei Unterschreiten der vorbestimmten Distanz von den Transpondern 22a und 22b ein die jeweilige Akte identifizierendes Signal empfängt. Diese Aktendaten werden zusammen mit den im Ortsdatenspeicher 32 gespeicherten Ortsdaten und gewünschtenfalls den von einem Zeitglied 34 bereitgestellten, den Zeitpunkt der Erfassung angebenden Zeitdaten als Datensatz in einem Datensatzspeicher 36 abgelegt. Sofern man davon ausgeht, dass sämtliche Aktenbewegungen zwischen den Büroräumen 14 und 16 durch den Büroboten vorgenommen werden, enthält der Datensatzspeicher 36 jeweils die genaue Information über den aktuellen Aufenthaltsort jeder Akte 12.

Da diese Voraussetzung aber in zahlreichen, beispielsweise den nachfolgend geschilderten Fällen nicht zutreffen wird, können noch weitere Maßnahmen ergriffen werden, um den Inhalt des Datensatzspeichers 36 auf einem möglichst aktuellen Stand zu halten:

Die Akten 12 können durch anderes Kanzleipersonal als den Büroboten von Büroraum zu Büroraum getragen werden. Es ist daher anzuraten, dass der Bürobote gelegentlich mit der Abfrageeinheit 20 nicht nur von den Transpondern 22 derjenigen Akten 12, die er gerade in den jeweiligen Büroraum gebracht hat, die Aktendaten abfragt, sondern auch von denjenigen Akten 12, die sich bereits in diesem Büroraum befinden. In dem in Fig. 1 dargestellten Ausführungsbeispiel ist dies beispielsweise die Akte 12e mit dem Transponder 22e.

Bedient sich eine Kanzlei mehrerer Büroboten, so sollte jeder dieser Büroboten mit einer mobilen Abfrageeinheit 20 ausgerüstet sein. In diesem Fall empfiehlt es sich ferner, eine Zentraleinheit 40 vorzusehen, die ebenfalls über einen Datensatzspeicher 42 verfügt. Wird die Abfrageeinheit 20 eines Büroboten in Datenaustauschverbindung mit der Zentraleinheit 40 gebracht, so können die in den Datensatzspeichern 36 und 42 gespeicherten Datensätze zu jeder der Akten 12 an Hand der Zeitdaten daraufhin überprüft werden, ob der Datensatzspeicher 36 der Abfrageeinheit 20 oder der Datensatzspeicher 42 der Zentraleinheit 40 den aktuelleren Datensatz enthält. Enhält der Datensatzspeicher 36 der Abfrageeinheit 20 den aktuelleren Datensatz, so wird dieser Datensatz in den Datensatzspeicher 42 der Zentraleinheit 40 geladen. Enthält hingegen der Datensatzspeicher 42 der Zentraleinheit 40 den aktuelleren Datensatz, so wird dieser in den Datensatzspeicher 36 der Abfrageeinheit 20 geladen. Die Zentraleinheit 40 kann somit zur Aktualisierung bzw. zum Datenabgleich der Abfrageeinheiten 20 der Mehrzahl von Büroboten genutzt werden.

In Kanzleien gibt es üblicherweise bestimmte Abteilungen, die besonders häufig Anlaufpunkt von Aktenbewegungen sind. Es wird hier insbesondere an die Fristenüberwachungsabteilung gedacht sowie an Abteilungen zur Abwicklung der Formalkorrespondenz mit Behörden und Gerichten. Gerade in diese Abteilungen werden Akten häufig von Sachbearbeitern oder Sekretärinnen gebracht, also unter Umgehung der Büroboten. In Fig. 1 ist dies beispielsweise der Büroraum 16, in den die Akten 12c und 12d von einer Sekretärin gebracht wurden. Um den Büroboten die Aktualisierung des Inhalts der Datensatzspeicher erleichtern zu können, ist in dem Büroraum 16 daher eine ortsfeste Abfrageeinheit 44 angeordnet, die über eine Datenleitung 46 mit der Zentraleinheit 40 in Verbindung steht. Mittels dieser ortsfesten Abfrageeinheit 44 kann die Anwesenheit der Akten 12c und 12d in dem Büroraum 16 erfasst werden.

Um die Abfrageeinheit 20 und die Zentraleinheit 40 auch zur Aktensuche verwenden zu können, verfügt die Abfrageeinheit 20 über eine Tastatur 48 und eine Anzeige 50, und verfügt die Zentraleinheit 40 ebenfalls über eine Tastatur 52 und eine Anzeige 54. Über die Tastaturen 48 und 52 können die gesuchte Akte spezifizierende Daten eingegeben werden. Über die Anzeigen 50 und 54 kann der jeweils im Datensatzspeicher 36 bzw. 42 gespeicherte Aufenthaltsort der Akte angezeigt werden.

Sollte trotz all dieser Maßnahmen eine bestimmte Akte einmal nicht aufgefunden werden können, so kann die Abfrageeinheit 20 ferner dazu ausgebildet sein, die Aktendaten dieser Akte zu speichern und dann, wenn bei einer der vorstehend beschriebenen Ergänzungsaktualisierungen von der Abfrageeinheit 20 die Aktendaten dieser gesuchten Akte erfasst werden, ein beispielsweise akustisches Warnsignal auszugeben.

## Patentansprüche

1. Vorrichtung (10) zum Auffinden eines vorbestimmten Objekts (12) an einem einer Mehrzahl von Orten (14, 16), umfassend:
- wenigstens einen dem Objekt (12) zugeordneten Objekt-Transponder (22), der das Objekt (12) identifizierende Daten (Objektdaten) beinhaltet,
- eine Mehrzahl von Orts-Transpondern (24), wobei jedem der Mehrzahl von Orten (14, 16) wenigstens ein Orts-Transponder (24) zugeordnet ist, der den jeweiligen Ort (14, 16) identifizierende Daten (Ortsdaten) beinhaltet,
- eine mobile Abfrageeinheit (20) mit wenigstens einem Interrogator (28), um von den Transpondern (22, 24) die Objektdaten bzw. die Ortsdaten abzufragen,
- einen Ortsdatenspeicher (32), in welchem dann, wenn die abgefragten Daten Ortsdaten sind, diese Ortsdaten ablegt werden, und
- einen Datensatzspeicher (36), in welchem dann, wenn die abgefragten Daten Objektdaten sind, ein Datensatz ablegt wird, welcher zumindest die Objektdaten und die in dem Ortsdatenspeicher abgelegten Ortsdaten umfasst.

2. Vorrichtung nach Anspruch 1,
**dadurch gekennzeichnet, dass** die mobile Abfrageeinheit (20) ferner mit einer Zentraleinheit (40) verbindbar ist, welche umfasst:
- einen zentralen Datensatzspeicher (42),
- eine Eingabevorrichtung (52) zum Auswählen eines gewünschten Objekts (12) und
- eine Anzeigevorrichtung (54) zum Anzeigen der zu dem gewünschten Objekt in dem Datensatzspeicher gespeicherten Ortsdaten.

3. Vorrichtung nach Anspruch 1 oder 2,
**dadurch gekennzeichnet, dass** sie ferner ein Zeitglied (34) umfasst, das den Zeitpunkt der Abfrage definierende Daten (Zeitdaten) bereitstellt, und dass der Datensatz ferner die Zeitdaten umfasst.

4. Vorrichtung nach einem der vorhergehenden Ansprüche,
**dadurch gekennzeichnet, dass** die von den Transpondern (22, 24) bereitgestellten Daten maschinen-definierte Daten sind.

5. Vorrichtung nach Anspruch 4,
**dadurch gekennzeichnet, dass** der Datensatz neben den maschinen-definierten Objektdaten ferner benutzer-definierte Objektdaten umfasst.

6. Vorrichtung nach einem der vorhergehenden Ansprüche,
**dadurch gekennzeichnet, dass** die mobile Abfrageeinheit (20) einen, vorzugsweise von Hand betätigbaren, Schalter (26) zur Aktivierung des wenigstens einen Interrogators (28) umfasst.

7. Vorrichtung nach einem der vorhergehenden Ansprüche,
**dadurch gekennzeichnet, dass** der wenigstens eine Interrogator (28) die Objektdaten bzw. die Ortsdaten von den Transpondern (22, 24) nur dann abfragt, wenn die Distanz zwischen Interrogator (28) und Transponder (22, 24) einen vorbestimmten Abstand unterschreitet.

8. Vorrichtung nach einem der vorhergehenden Ansprüche,
**dadurch gekennzeichnet, dass** der wenigstens eine Interrogator (28) zur gleichzeitigen Kommunikation mit einer Mehrzahl von Transpondern (22, 24) ausgebildet ist.

9. Vorrichtung nach einem der vorhergehenden Ansprüche,
**dadurch gekennzeichnet, dass** die Transponder (22, 24) passive Transponder sind.

10. Vorrichtung nach einem der vorhergehenden Ansprüche,
**dadurch gekennzeichnet, dass** die Objekt-Transponder (22) und die Orts-Transponder (24) baugleich sind.

11. Vorrichtung nach einem der vorhergehenden Ansprüche,
**dadurch gekennzeichnet, dass** die mobile Abfrageeinheit (20) eine Eingabevorrichtung (48) zum Auswählen eines gewünschten Objekts (12) umfasst.

12. Vorrichtung nach Anspruch 11,
**dadurch gekennzeichnet, dass** die mobile Abfrageeinheit (20) eine Anzeigevorrichtung (50) zum Anzeigen der zu dem gewünschten Objekt (12) in dem Datensatzspeicher (36) gespeicherten Ortsdaten umfasst.

13. Vorrichtung nach Anspruch 12,
**dadurch gekennzeichnet, dass** die Anzeigevorrichtung (50) zu dem gewünschten Objekt (12) ferner die in dem Datensatzspeicher (36) gespeicherten Zeitdaten anzeigt.

14. Vorrichtung nach einem der vorhergehenden Ansprüche,
**dadurch gekennzeichnet, dass** wenigstens eine ortsfeste Abfrageeinheit (44) vorgesehen ist mit wenigstens einem Interrogator, um von den Objekt-Transpondern (22) die Objektdaten abzufragen.
